# EUROPÄISCHE PATENTSCHRIFT

(11) **EP 2 028 140 B1**
(45) Veröffentlichungstag und Bekanntmachung des Hinweises auf die Patenterteilung: **03.11.2010**
(21) Anmeldenummer: 08013883.7
(22) Anmeldetag: 02.08.2008
(51) Int. Cl.: B65G 45/16

(54) **Förderbandabstreifer mit Halterung**
Conveyor belt scraper with support
Racleur de bande de convoyeur avec un support

(30) Priorität: 22.08.2007 DE 202007011727 U; 10.11.2007 DE 102007053697
(43) Veröffentlichungstag der Anmeldung: 25.02.2009
(73) Patentinhaber: Schulmeistrat, Hans-Dieter, 46354 Südlohn (DE)
(72) Erfinder: Schulmeistrat, Hans-Dieter, 46354 Südlohn (DE)
(74) Vertreter: Hallermann, Dietrich-Otto

(56) Entgegenhaltungen:
- EP-A1- 1 218 268
- DE-U1- 20 116 439
- JP-A- 2 239 015
- US-A- 6 152 290

## Beschreibung

Die Erfindung betrifft einen Förderbandabstreifer, der im wesentlichen aus einer mit einer Hartmetallschneide versehenen, beispielsweise parabolartig geformten Abstreiferleiste zum Reinigen der Unterseite des Untergurtes eines umlaufenden Förderbandes besteht, wobei die die Abstreiferleiste tragende Halterung beidseitig des Fördergurtes mit der Abstreiferleiste verbundene Traversenstummel aufweist, die wiederum über Schwingen mit dem Förderertraggerüstes fest verbunden sind.

Der im Gattungsbegriff dargestellte Förderbandabstreifer ist in dem DE-GM 201 16 439.6 näher beschrieben. Der wesentliche Vorteil einer derartigen Ausführung einer Abstreiferleiste ist darin zu sehen, dass das anhaftende und abzustreifende Fördergut nicht auf einmal über die gesamte Bandbreite abgestreift wird, sondern dass das Fördergut entsprechend der Biegung oder Form der Abstreiferleiste von außen nach innen erfasst und abgestreift wird. Darüber hinaus ergibt sich vornehmlich bei nassem Fördergut der Vorteil, dass das mitgeführte Wasser bzw. Tropfen bildende oder Nässe aufweisende Fördergut von außen nach innen eine Wasseranreicherung mit sich bringt, die einen zusätzlichen Reinigungseffekt erzielt.

Dennoch weist die Konstruktion nach dem oben aufgeführten DE-GM erhebliche Nachteile auf. Bei Zerstörung durch Verschleiß oder Bruch der in der Abstreiferleiste eingelassenen und mit dieser verklebten oder verschweißten Hartmetallschneide ist insbesondere, bedingt durch die feste Verschraubung, mit einer in seitlichen Halterungen gelagerten Stützkonstruktion ein erheblicher, die Unterbrechung des Förderbetriebes benachteiligender handwerklicher Aufwand erforderlich.

Diese Schwierigkeiten gelten auch für andere, beispielsweise quer zum Fördergurt verlaufende oder weitere von der genannten parabolartig geformten Abstreiferleiste abweichende, gegen den Untergurt gerichtete Abstreiferleisten.

Dementsprechend liegt der vorliegenden Erfindung die Aufgabe zugrunde, einen Förderbandabstreifer zu schaffen, der unter Nutzung der besonderen Vorteile der parabolartig geformten Abstreiferleiste aber auch unter Berücksichtigung anders geformter Abstreiferleisten, die Schwierigkeiten beim Ein- und Ausbau, insbesondere bei Reparaturen ausschließt, der in der Herstellung eine wesentliche Vereinfachung mit sich bringt, der die Unterbrechung des Förderbetriebes minimiert, der eine leichte, durch Gewichtsersparnis bedingte Handhabung gewährleistet und insgesamt eine verbesserte wirtschaftliche Lösung darstellt.

Diese Aufgabe wird erfindungsgemäß dadurch gelöst, dass die Traversenstummel an den zur Abstreiferleiste gerichteten Enden nach oben offene, schlitzartige Ausnahmeöffnungen und die Abstreiferleiste zum auswechselbaren Einsetzen in die Aufnahmeöffnungen mit diesen korrespondierende Verbindungselemente aufweist.

Die mit den Aufnahmeöffnungen korrespondierenden Verbindungselemente sind an den Enden der Abstreiferleiste, unabhängig von der Form der Abstreiferleiste, rechtwinklig zur Förderrichtung verlaufend ausgebildet.

Vorteilhafterweise sind die schlitzartigen Aufnahmeöffnungen in mit an Traversenstummeln fest verbundenen Tragscheiben angeordnet. Zur Verstärkung der die Verbindungselemente der Abstreiferleisten tragenden Tragscheiben und auch aus konstruktionstechnischen Gründen ist an den Traversenstummeln jeweils eine zusätzliche Tragscheibe angeschweißt.

Im Rahmen der Erfindung ist ein besonderer Vorteil auch darin zu sehen, dass in den Tragscheiben unterhalb der nach oben offenen Aufnahmeöffnung zur Höhenverstellung der Abstreiferleiste jeweils eine Stellschraube und zur Arretierung der Verbindungselemente bzw. der Abstreiferleiste innerhalb der Aufnahmeöffnungen eine von der Seite her in der Tragscheibe einschraubbare Madenschraube vorgesehen sind.

Zur besseren und genaueren Anpassung der Abstreiferleiste an die ständigen Bewegungen des Förderbandes weisen die seitlichen Halterungen der Abstreiferleiste in bekannter Weise Torsionsfederelementen auf, wobei deren Gehäuse jeweils über eine Konsole mit dem stationären Teil des Förderbandes mittels einer Schraubverbindung und die Torsionsfederelemente mit Schwingen verbunden sind, an deren Enden zur Aufnahme der Traversenstummel Hülsen vorgesehen sind. Als besonders vorteilhaft erweist sich weiterhin, dass die Schwingen aus gegeneinander in vertikaler Ebene verstellbaren Abschnitten bestehen, die in der Länge einstellbar und in der Höhe in verschiedenen Positionen feststellbar ausgebildet sind.

Verschiedene Ausführungsbeispiele und Einzelteile der Erfindung sind in den Zeichnungen dargestellt und werden im nachfolgenden näher beschrieben. Es zeigen:
- Figur 1: eine Draufsicht auf ein Ausführungsbeispiel einer Abstreiferleiste,
- Figur 2: eine Draufsicht auf die Abstreiferleiste mit Teilen der seitlichen Halterunden, nach Figur 1
- Figur 3: eine Vorderansicht in Förderrichtung, nach Figur 1
- Figur 4: eine Draufsicht in Reversierstellung der Abstreiferleiste,
- Figur 5 + 6: eine Seitenansicht und eine Ansicht von oben auf die Traversenstummel als Teil der seitlichen Halterung,
- Figur 7 - 9: verschiedene Positionen der die Traversenstummel aufnehmenden, über in Torsionsfederelementen gelagerte Schwingen und
- Figur 10 u. 11: ein weiteres Ausführungsbeispiel einer Abstreiferleiste in Vor der- und Draufsicht.

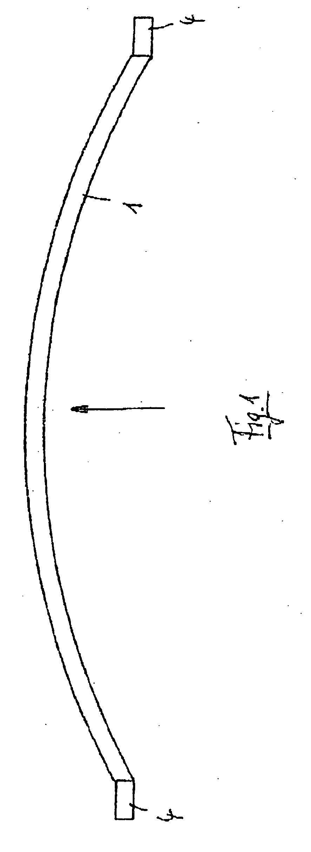

In Figur 1 ist in einer Draufsicht als Ausführungsbeispiel eine parabolartig geformte oder gebogene Abstreiferleiste 1 wiedergegeben, wobei beispielsweise die Förderrichtung des nicht dargestellten Gurtbandes durch den Pfeil angedeutet ist. Die in der Abstreiferleiste 1 eingeklebte oder eingeschweißte Hartmetallschneide 2 ist in dieser Zeichnung nicht angedeutet. Die Abstreiferleiste 1 weist an den Enden Verbindungselemente 4 auf, die exakt rechtwinklig zur Förderrichtung verlaufen und mit der Abstreiferleiste 1 eine Einheit bilden.

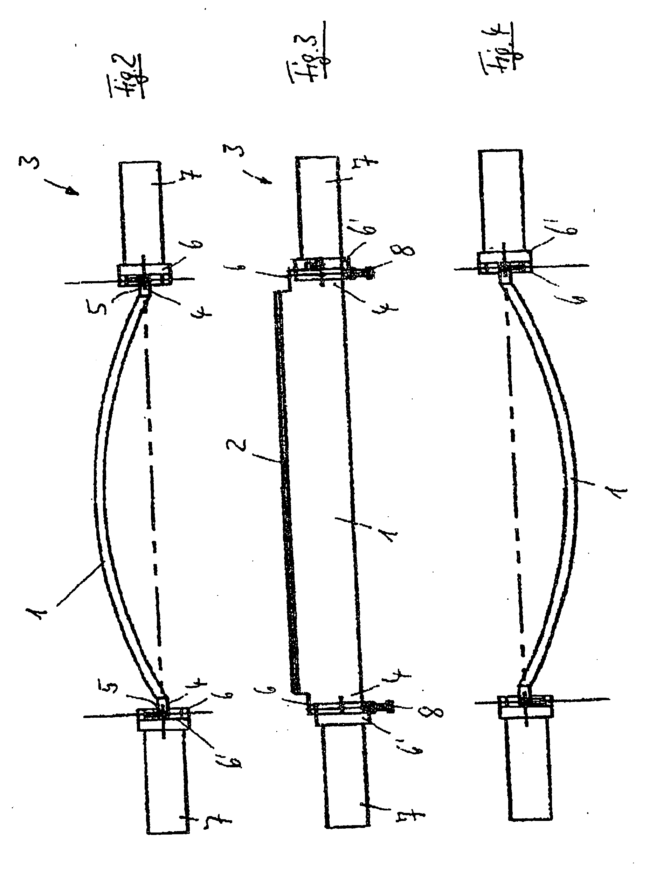

Die Draufsicht nach Figur 2 zeigt die Verbindung der Verbindungselemente 4 mit einem Teil der Halterung 3, und zwar mit den rohrartigen Traversenstummeln 7. Diese weisen zur Abstreiferleiste 1 gerichtet kreisförmige Tragscheiben 6 auf, welche schlitzartige Aufnahmeöffnungen 5 zur Aufnahme der Verbindungselemente 4 beinhalten. Die Abstreiferleiste 1 wird nach einem derartigen Ausführungsbeispiel in die Aufnahmeöffnungen 5 von oben eingesteckt und kann, wie Figur 3 zeigt , über Stellschrauben 8 in der Höhe eingestellt und über Madenschrauben 9 in den Aufnahmeöffnungen 5 fest positioniert werden.

In Figur 4 ist die Möglichkeit angedeutet, die Abstreiferleiste 1 bei Reversierbetrieb auf einfache und schnelle Weise in die entsprechende Position zu bringen.

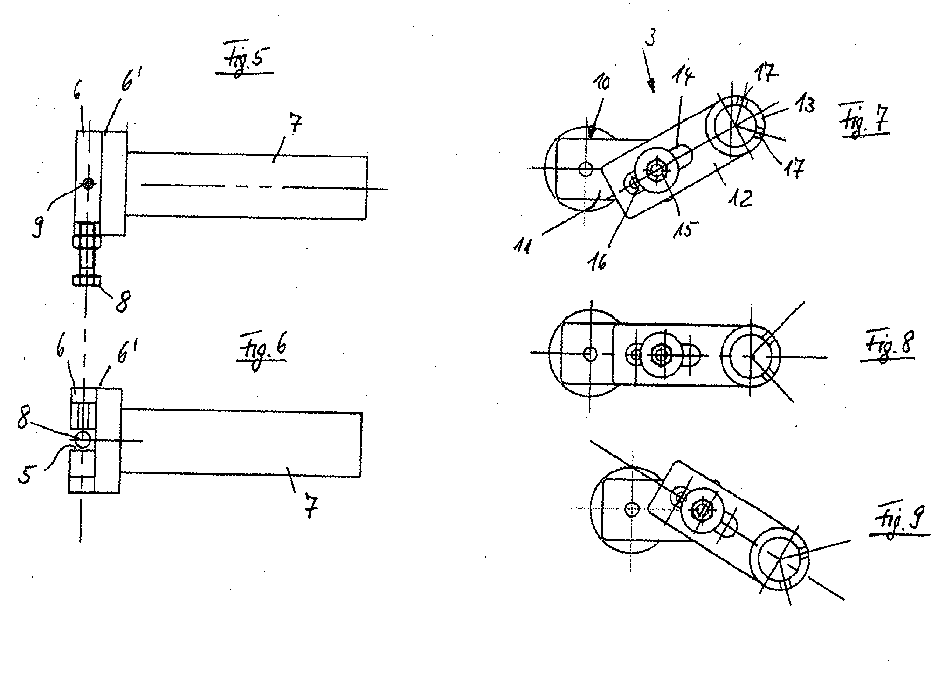

In den Figuren 5 und 6 ist in Seitenansicht und in Draufsicht eine Detaildarstellung der Traversenstummel 7 als Teil der Halterung 3 wiedergegeben. Die Traversenstummel 7 weisen zur Aufnahme der Verbindungselemente 4 der Abstreiferleiste 1 zwei miteinander fest verschweißte kreisförmige zylindrische Tragscheiben 6, 6' auf, wobei in der zur Abstreiferleiste 1 gerichteten Tragscheibe 6 die Aufnahmeöffnung 5 die Madenschraube 9 und die zur Höheverstellung erforderliche Stellschraube 8 angedeutet sind.

In den Figuren 7 bis 9 sind in drei unterschiedlichen Stellungen die zur Aufnahme der Abstreiferleiste 1 erforderlichen vollständigen Halterungen 3 als Ausführungsbeispiele aufgezeigt. Die Traversenstummel 7 sind seitlich jeweils in Hülsen 13 gelagert. Zur Anpassung der Abstreiferleiste 1 an die Bewegungen des Förderbandes sind nicht näher dargestellte Torsionsfederelemente 10 vorgesehen, deren Gehäuse mit dem feststehenden Teil des Traggerüstes verbunden sind. Mit den Torsionsfederelementen 10 sind die Schwingen 11, 12 verbunden, die wiederum zur besseren Anpassung der Abstreiferleiste 1 an den Untergurt aus zwei Abschnitten 11, 12 bestehen. Der Abschnitt 12 ist mit einem Langloch 14 versehen, in welches ein plattenartiges Element 16 einsetzbar und über die Schraubverbindung 15 arretierbar ist. Das plattenartige Element 16 weist nach innen gerichtet einen nicht näher dargestellten Fortsatz auf, der in verschiedene, ebenfalls nicht dargestellte Öffnungen im Schwingenabschnitt 11 einsetzbar ist und somit über die Schraubverbindung 15 die Positionen nach den Figuren 7 bis 9 ermöglicht.

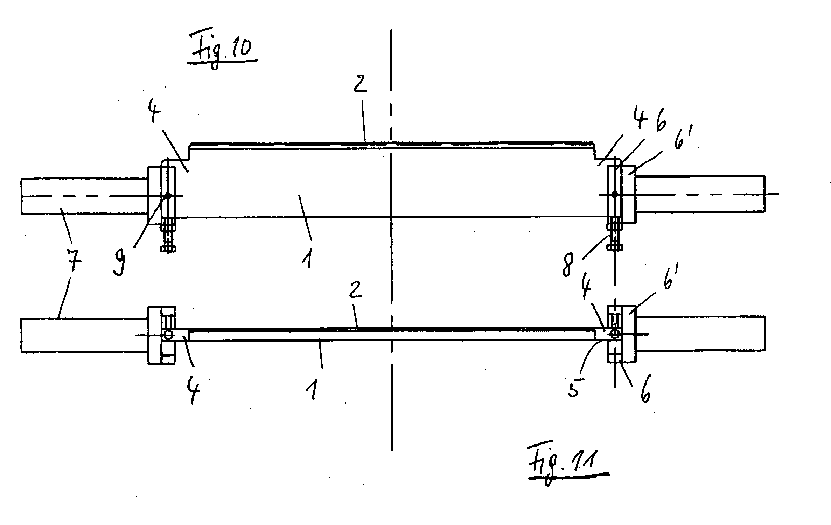

In den Figuren 10 und 11 ist in verschiedenen Ansichten ein Ausführungsbeispiel einer geraden Abstreiferleiste 1 dargestellt, wobei die Abstreiferleiste 1 mit Verbindungselementen 4 und die Traversenstummel 7 bzw. die Tragscheiben mit den entsprechenden Aufnahmeöffnungen 5 versehen sind.

### Bezugszeichenliste

- 1: Abstreiferleiste
- 2: Hartmetallschneide
- 3: Halterung
- 4: Verbindungselemente
- 5: Schlitzartige Aufnahmeöffnungen
- 6,6': kreisförmige Tragscheiben
- 7: Traversenstummel
- 8: Stellschraube
- 9: Madenschraube
- 10: Torsionsfederelement
- 11: Schwinge
- 12: Schwinge
- 13: Hülse
- 14: Langloch
- 15: Schraubverbindung
- 16: Plattenartiges Element
- 17: Festsetzschrauben

## Patentansprüche

1. Förderbandabstreifer, der im wesentlichen aus einer mit einer Hartmetallschneide (2) versehenen, beispielsweise parabolartig geformten Abstreiferleiste (1) zum Reinigen der Unterseite des Untergurtes eines umlaufenden Förderbandes besteht, wobei die die Abstreiferleiste (1) tragende Halterung (3) beidseitig des Fördergurtes mit der Abstreiferleiste (1) verbundenen Traversenstummel (7) aufweist, die wiederum über Schwingen (11,12) mit am Förderertraggerüst fest verbundenen Torsionsfederelementen (10) verbunden sind, **dadurch gekennzeichnet, dass** die Traversenstummel (7) an den zur Abstreiferleiste (1) gerichteten Enden nach oben offene, schlitzartige Aufnahmeöffnungen (5) und die Abstreiferleiste (1) zum auswechselbaren Einsetzen in die Aufnahmeöffnungen (5) mit diesen korrespondierende Verbindungselemente (4) aufweisen.

2. Förderbandabstreifer nach Anspruch 1, **dadurch gekennzeichnet, dass** die mit den Aufnahmeöffnungen (5) korrespondierenden Verbindungselemente (4) an den Enden der Abstreiferleiste (1) in der Draufsicht rechtwinklig zur Förderrichtung verlaufend ausgebildet sind.

3. Förderbandabstreifer nach Anspruch 1, **dadurch gekennzeichnet, dass** die schlitzartigen Aufnahmeöffnungen (5) in mit den Traversenstummeln (7) fest verbundenen Tragscheiben (6) angeordnet sind.

4. Förderbandabstreifer nach Anspruch 1, **dadurch gekennzeichnet, dass** zur Verstärkung der die Verbindungselemente (4, 5) tragenden Tragscheiben (6) eine zusätzliche mit den Traversenstummeln (7) fest verschweißte Tragscheibe (6') vorgesehen ist.

5. Förderbandabstreifer nach Anspruch 1, **dadurch gekennzeichnet, dass** die Tragscheiben (6) unterhalb der nach oben offenen Aufnahmeöffnungen (5) zur Höhenverstellung der Abstreiferleiste (1) jeweils eine Stellschraube (8) aufweisen.

6. Förderbandabstreifer nach Anspruch 1, **dadurch gekennzeichnet, dass** zur Arretierung der Abstreiferleiste (1) innerhalb der nach oben offenen Aufnahmeöffnungen (5) eine von der Seite her in die Tragscheibe (6) einschraubbare Madenschraube (9) vorgesehen ist.

7. Förderbandabstreifer nach Anspruch 1, **dadurch gekennzeichnet, dass** die Schwingen (11, 12) in bekannter Weise aus zwei mittels einer Schraubverbindung (15) verbindbaren und gegeneinander in vertikaler Ebene verstellbaren Abschnitten besteht.

8. Förderbandabstreifer nach Anspruch 7, **dadurch gekennzeichnet, dass** die Abschnitte (11, 12) der Schwingen mittels eines im äußeren Schwingenabschnitt (12) vorgesehenen Langlochs (14) und eines in das Langloch (14) einsetzbaren, plattenartigen, mehrere Öffnungen aufweisenden Elementes (16) und der das plattenartige Element (16) aufnehmenden Schraubenverbindung (15) in der Länge und Höhe verstellbar ausgebildet sind.

## Claims

1. A conveyor belt wiper, essentially consisting of a wiper strip (1), equipped with a hard metal blade (2), for example, formed in a parabolic shape, for cleaning the bottom of the sub-belt of a circumferential conveyor belt, wherein the fixture (3) supporting the wiper strip (1) has traverse stubs (7) connected to the wiper strip (1) on both sides of the conveyor goods, which in turn are connected to torsion spring elements (10) that are firmly connected to the conveyor support frame via rocker arms, wherein the traverse stubs (7) have slot-shaped recess openings (5) that are open toward the top at the ends thereof that are aligned toward the wiper strip (1), and the wiper strip (1) has connecting elements (4) corresponding with the recess openings (5) for the exchangeable installation into the same.

2. The conveyor belt wiper according to claim 1, **characterized in that** the connecting elements (4) corresponding with the recess openings (5) are embodied in a manner extending at a right angle to the conveyor direction at the ends of the wiper strip (1) in a top view.

3. The conveyor belt wiper according to claim 1, **characterized in that** the slot-shaped recess openings (5) are disposed in support disks (6) that are firmly connected to the traverse stubs (7).

4. The conveyor belt wiper according to claim 1, **characterized in that** an additional support disk (6') that is firmly welded to the traverse stubs (7) is provided for the reinforcement of the support disks (6) supporting the connecting elements (4, 5).

5. The conveyor belt wiper according to claim 1, **characterized in that** the support disks (6) each have an adjustable screw (8) below the recess openings (5) that are open toward the top for the height adjustment of the wiper strip (1).

6. The conveyor belt wiper according to claim 1, **characterized in that** a headless screw (9) that can be inserted into the support disk (6) from the side is provided for locking the wiper strip (1) within the recess openings (5) that are open toward the top.

7. The conveyor belt according to claim 1, **characterized in that** the rocker arms (11, 12) consist of two sections that can be connected by means of a screwed connection (15) and adjusted against each other in a vertical plane, in a known manner.

8. The conveyor belt wiper according to claim 1, **characterized in that** the sections (11, 12) of the rocker arms are embodied in a length and height adjustable manner by means of an elongated hole (14) provided in the exterior rocker arm section (12), and by means of a plate-like element (16) having multiple openings that may be inserted into the elongated hole (14), and by means of the screwed connection (15) receiving the plate-like element (16).

## Revendications

1. Racloir de bande transporteuse, qui est formé pour l'essentiel par une lame de raclage (1), en forme de parabole par exemple, munie d'une arête de coupe (2) en carbure et destinée à nettoyer la face inférieure du brin inférieur d'une bande transporteuse tournant en continu, sachant que le support (3), qui porte la lame de raclage (1), comporte de part et d'autre de la bande transporteuse des bouts de traverse (7) qui sont reliés à la lame de raclage (1) et qui sont également reliés par l'intermédiaire de bras oscillants (11, 12) à des éléments de ressort de torsion (10), reliés de manière fixe au bâti de support du convoyeur, **caractérisé en ce que** les bouts de traverse (7), au niveau des extrémités orientées vers la lame de raclage (1), comportent des orifices de réception (5) en forme de fentes, ouverts vers le haut, et la lame de raclage (1), en vue de son montage amovible dans les orifices de réception (5), comporte des éléments d'assemblage (4) correspondant à ceux-ci.

2. Racloir de bande transporteuse selon la revendication 1, **caractérisé en ce que** les éléments d'assemblage (4), situés aux extrémités de la lame de raclage (1) et correspondant avec les orifices de réception (5), sont réalisés en étant orientés perpendiculairement au sens de transport selon la vue en élévation.

3. Racloir de bande transporteuse selon la revendication 1, **caractérisé en ce que** les orifices de réception (5) en forme de fentes sont disposés dans des disques de support (6) reliés de manière fixe aux bouts de traverse (7).

4. Racloir de bande transporteuse selon la revendication 1, **caractérisé en ce que**, pour renforcer les disques de support (6) portant les éléments d'assemblage (4, 5), il est prévu un disque de support (6') supplémentaire soudé de manière fixe aux bouts de traverse (7).

5. Racloir de bande transporteuse selon la revendication 1, **caractérisé en ce que** les disques de support (6), en dessous des orifices de réception (5) ouverts vers le haut, comportent respectivement une vis de réglage (8) pour le réglage en hauteur de la lame de raclage (1).

6. Racloir de bande transporteuse selon la revendication 1, **caractérisé en ce que** pour immobiliser la lame de raclage (1), il est prévu à l'intérieur des orifices de réception (5) ouverts vers le haut une vis sans tête (9) pouvant être vissée depuis le côté dans le disque de support (6).

7. Racloir de bande transporteuse selon la revendication 1, **caractérisé en ce que** les bras oscillants (11, 12) sont formés, de manière connue, par deux parties pouvant être assemblées l'une à l'autre par un assemblage vissé (15) et réglables l'une par rapport à l'autre dans un plan vertical.

8. Racloir de bande transporteuse selon la revendication 7, **caractérisé en ce que** les parties (11, 12) des bras oscillants sont réalisées de manière réglable en longueur et en hauteur au moyen d'un trou oblong (14), prévu dans la partie extérieure (12) du bras oscillant, et d'un élément (16) insérable dans le trou oblong (14), en forme de plaque munie de plusieurs orifices, et de l'assemblage vissé (15) recevant l'élément (16) en forme de plaque.
